# EUROPEAN PATENT APPLICATION

(11) **EP 1 217 564 A2**
(43) Date of publication of application: **26.06.2002**
(21) Application number: 01310247.0
(22) Date of filing: 07.12.2001
(51) Int. Cl.: G06F 17/60

(54) **Systems and methods for linking bids and offers in a trading interface**

(30) Priority: 07.12.2000 US 251790 P; 29.11.2001 US 995698
(71) Applicant: eSpeed, Inc., New York, NY 10171 (US)
(72) Inventor:
(74) Representative: Jones, David Colin

(57) **Abstract**

Systems and methods for linking bids and offers in a trading interface are provided. The systems and methods of the present invention are directed particularly towards linking bids and offers related to the same or similar items (e.g., currency, stocks, bonds, futures contracts, energy). A user may enter parameters for linking bids and offers. The user may enter bids and offers. The parameters may be entered prior to, or concurrently with, the entry of the bids and offers. In response to a trading system receiving parameters and bids and offers entered by a user, the trading system may generate an offer and a bid substantially simultaneously. Generating an offer and a bid substantially simultaneously may reduce the adverse affects of changed market conditions on the latter of an entered bid or offer.

## Description

### Cross Reference to Related Application

This application claims the benefit of United States Provisional Patent Application Serial No. 60/251,790, filed December 7, 2000, which is hereby incorporated by reference herein in its entirety.

### Background of the Invention

This invention relates to linking bids and offers. More particularly, this invention relates to systems and methods for linking bids and offers in a trading interface.

Electronically based trading systems have gained widespread popularity in recent years. Such trading systems are frequently used for trading items ranging from financial instruments (such as stocks, bonds, currency, futures contracts, etc.) to used household goods (such as old records, antiques, etc.).

In many of these trading systems, bid/offer-hit/take processes are used to negotiate a sale of a given item. In connection with such processes, bids and offers for items are entered into a trading system and brought to market. A hit or take is submitted in response to a bid or offer on the market, respectively, to agree to a sale. In many of these trading systems, an offer or bid is generated by the trading systems when a bid or offer is entered by a user of the trading systems.

Sometimes, when a user enters a bid and an offer related to the same or similar items, the bid or offer brought to market first may adversely affect the market conditions for the offer or bid subsequently brought to market. It is therefore desirable to reduce the time between bringing a bid to market and brining an offer to market where the bid and offer are related to the same or similar items.

In view of the foregoing, it would be desirable to provide systems and methods for linking bids and offers using a trading interface.

### Summary of the Invention

It is an object of this invention to provide systems and methods for linking bids and offers in a trading interface.

In accordance with the present invention, a user may be provided with a trading interface in order to link bids and offers as well as initiate other related trading commands. The trading interface may be capable of accessing various bid and offer data and applying requests to link bids and offers. The bids and offers may be input via the trading interface, loaded from existing books containing bid and offer data, imported from other suitable trading applications, or accessed through any other suitable means.

A user may use the trading interface to enter parameters (the term "parameter" is defined herein for purposes of this application as values setting the relationship between a linked bid and offer, or alternatively, values for an individual bid or offer) for linking bids and offers as well as entering bids and offers. The parameters may be entered prior to, or concurrently with, the entry of bids and offers. In response to a trading system receiving parameters, a bid, and/or an offer entered by a user, the trading system may generate a linked bid and offer and preferably bring the linked bid and offer to market -- i.e., present the linked bid and offer on an interface whereby other users may hit the bid and take the offer -- preferably substantially simultaneously. Bringing a bid and an offer substantially simultaneously to market may reduce the adverse affects of changed market conditions on the latter of the bid or offer brought to market.

Furthermore, the invention may also automatically generate a parameter for linking the bid and the offer based on any suitable data -- e.g., the parameter being based on historical market data to reflect a particularly desirable spread between the bid and offer based on liquidity calculations or other suitable data.

The present invention may be implemented with any type of trading system for the trading of any type of item. Such items include, for example, energy, futures contracts, stocks, bonds, and currency.

### Brief Description of the Drawings

Further features of the invention, its nature and various advantages will be more apparent from the accompanying drawings and the following detailed description of the preferred embodiments.

FIG. 1 is a block diagram of an illustrative trading system in accordance with the principles of one embodiment of the present invention.

FIG. 2 is a block diagram of an illustrative trading system in accordance with the principles of one embodiment of the present invention.

FIG. 3 is a block diagram of an illustrative trading interface in accordance with the principles of one embodiment of the present invention.

FIG. 4 is a flow chart of illustrative steps of a trading system generating linked bids and offers based on user inputs in accordance with the principles of one embodiment of the present invention.

FIG. 5 is a flow chart of illustrative steps of a trading system determining whether a bid or offer was specifically entered as a linked bid or offer and whether the user would like to link a bid or offer to an offer or bid in accordance with the principles of one embodiment of the present invention.

FIG. 6 is an illustrative display window of a trading interface in accordance with the principles of one embodiment of the present invention.

FIG. 7 is an illustrative display window of a trading interface in which a book of bids or offers has been imported or opened in accordance with the principles of one embodiment of the present invention.

FIG. 8 is an illustrative display window of a trading interface in which a user may link a bid and an offer in accordance with the principles of one embodiment of the present invention.

FIG. 9 is an illustrative display window of a trading interface in which a user may link a bid and an offer in accordance with the principles of one embodiment of the present invention.

FIG. 10 is an illustrative display window of a trading interface before the user is prompted to link a new bid to an offer in accordance with the principles of one embodiment of the present invention.

FIG. 11 is an illustrative display window of a trading interface in which the user is prompted to link a new bid to an offer in accordance with the principles of one embodiment of the present invention.

### Detailed Description Of The Invention

This invention is directed towards linking bids and offers in an electronic trading system. When a bid and an offer related to the same or similar item (e.g., energy, stocks, futures contracts, bonds, currency) are brought to market in an electronic trading system, the bid or offer subsequently brought to market may become a less attractive sale or buy. This may be because the bid or offer brought to market first may have adversely affected the market conditions for the offer or bid subsequently brought to market. This may be especially true in fast paced trading systems. Market conditions may change considerably in even one second.

For example, if a user of an electronic trading system entered a bid to buy 100 million U.S. dollars in Japanese Yen at X U.S. dollars per Yen and then entered an offer to sell 10 million U.S. dollars worth of French Francs at Y U.S. dollars per Franc, the Francs may become a less attractive buy for a potential buyer. That is, the sale or potential sale of the U.S. dollars for Yen may weaken the U.S. dollar making the offer to buy U.S. dollars less attractive. X and Y could be fixed values (i.e., absolute values) or values that are functions of each other or some other value or values.

The electronic trading system of the present invention may reduce the time between bringing a first bid or offer to market and bringing a second offer or bid to market. A user of a trading interface of the present electronic trading system may enter parameters for linking a bid and an offer. Such parameters may be, for example, that the price or size of the bid is fixed (i.e., absolute) or a function of some other parameter such as the price or size of an offer and that the price or size of the offer is fixed (i.e., absolute) or a function of some other parameter such as the price or size of a bid. The user may enter parameters in response to a prompt from the trading system.

In an alternative embodiment, these parameters may be automatically generated based on a historical analysis of a particular market. For example, if a particular spread has proven over time to be the most common spread in a given market, that particular spread may be automatically implemented as the parameter by which the linked offer is set with respect to the bid or the linked bid with respect to the offer.

Alternatively, a historically common volume or size of a trade, determined by mean, median, average or any other suitable metric, may be utilized either by itself, or in conjunction with a particular price spread, and implemented in an algorithm or other function to determine the parameters for a linked offer or bid. Any other suitable parameter may also be implemented to obtain the proper spread for linking a bid and an offer.

Such suitable parameters may be tailored to the individual requirements of the user. For example, if a user desires a more liquid position, he may configure his spread to be less than the normal spread in the market. Conversely, if a user desires a less liquid position, he may configure his spread to be more than the normal spread in the market.

In addition, the spread may be determined based on data other than historical data. For example, if a new product opened in the energy market, and no historical data existed for that particular product, the automatically-generated spread may be generated based on historical data for other instruments in the energy market.

Furthermore, the spread may be fixed or fluctuating. The fluctuation may depend on market data, current market conditions, pertinent information, or any other suitable underlying trend. The fluctuation may also be determined based on fluctuations in the spread or other data that occur hourly, daily, weekly, monthly, quarterly, seasonally, annually, or any other suitable time period.

The user may enter a bid and an offer specifically as a linked bid and offer, or the user may enter a bid or an offer as any other bid or offer. In response to the electronic trading system receiving a bid or an offer that was entered as specifically linked to an offer or bid, the system may bring the bid and the offer to market substantially simultaneously. That is, the electronic trading system may provide users of the electronic trading system with the opportunity to act on (i.e., take or hit) an offer or bid. The offer and bid are preferably able to be acted upon simultaneously. This may reduce the time that a bid or offer brought to market may have to adversely affect the market conditions for an offer or bid subsequently brought to market.

If a bid or offer was not entered into the trading system as specifically linked to an offer or a bid, the electronic trading system may determine whether the parameters for the bid or offer match the parameters of a bid or offer previously linked to an offer or bid. If the parameters of the bid or offer do not match the parameters of a bid or offer previously linked to an offer or bid, a non-linked bid or offer may be brought to market.

If the parameters of the bid or offer match (or are close to -- i.e., within a pre-determined range of) the parameters of a bid or offer previously linked to an offer or bid, the trading system may prompt the user to enter the bid or offer as linked. If the prompt is not accepted, a non-linked bid or offer may be brought to market. If the prompt is accepted, the trading system may generate a linked bid and offer based on the parameters entered and/or accepted by the user and bring the linked bid and offer to market.

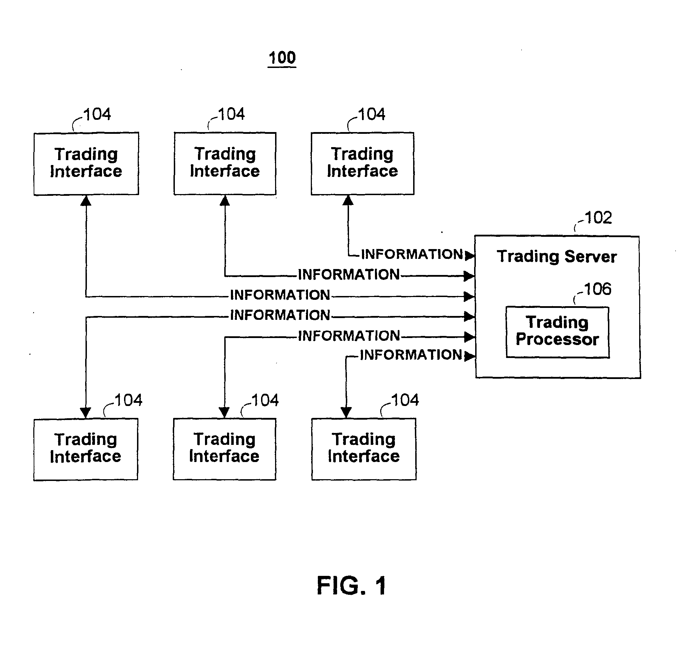

An electronic trading system 100 in accordance with the present invention is illustrated in FIG. 1. Electronic trading system 100 may include a trading sever 102 and several trading interfaces 104. Electronic trading system 100 may include any hardware, software, network infrastructure, or any other suitable components that may be used to link bids and offers, place bids and/or offers, bring bids and/or offers to market, hit bids, and take offers.

Trading server 102 may be implemented on any suitable hardware such as a computer or a server. Trading server 102 may include any suitable processor to process parameters for linking bids and offers, process requests to place bids and offers, process requests to link bids and offers, link bids and offers based on entered parameters, generate parameters for linking bids and offers, generate bids and offers, generate linked bids and offers, and for bringing bids and/or offers to market. Such a suitable processor may be trading processor 106. Trading processor 106 may be, for example, a microprocessor.

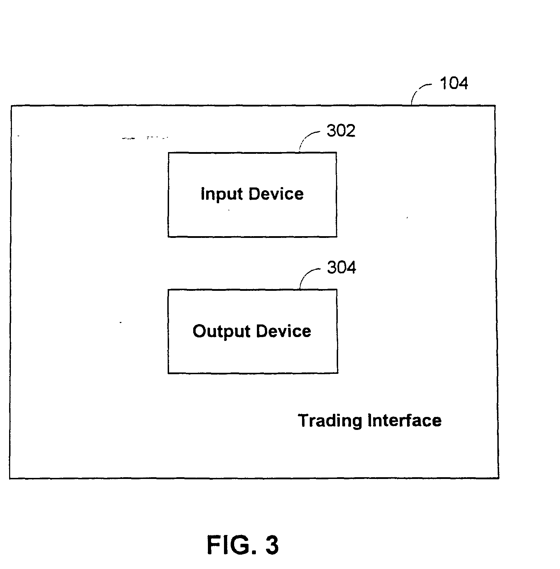

A user of trading system 100 may use a trading interface 104 to enter parameters for linking bids and offers, enter parameters for bids and offers, enter linked bids and offers, link bids and offers, hit bids, and take offers. Trading interfaces 104 may be implemented on any suitable hardware. Suitable hardware includes, for example, personal computers, servers, or any other suitable hardware that includes a processor. Although trading system 100 is shown with six trading interfaces 104, trading system 100 may include any suitable number of trading interfaces 104. Trading interfaces 104 will be described in more detail in connection with FIG. 3.

As shown in FIG. 1, information may be communicated between trading server 102 and trading interfaces 104 via communications paths 112. Such information may be any suitable information such as parameters for linking bids and offers, parameters for bids and offers, requests to place bids and offers, requests to link bids and offers, information on generated bids and offers, information on generated linked bids and offers, and market information. Paths 112 may be any suitable communications paths. Paths 112 may be, for example, wired or wireless paths, and may be part of, or coupled to, a communications network.

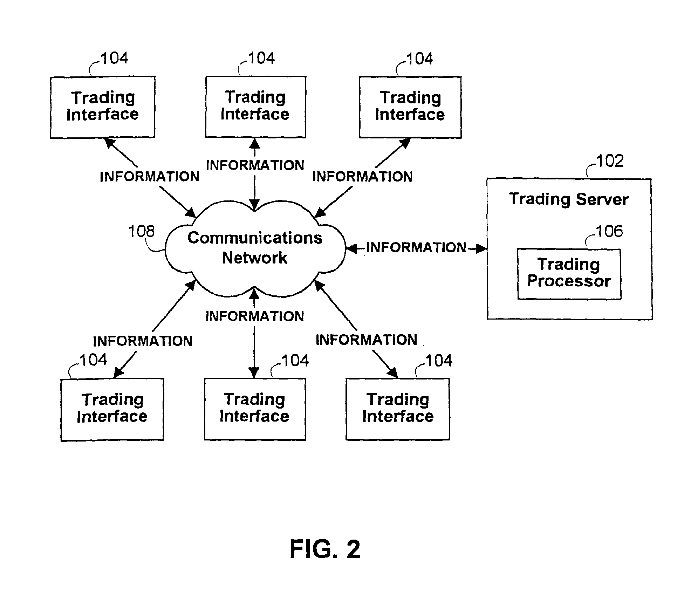

As illustrated in FIG. 2, trading interfaces 104 may be coupled to trading server 102 via a communications network such as communications network 108. Communications network 108 may be any suitable communications network capable of communicating information between trading interfaces 104 and trading server 102. Such suitable communications networks may be, for example, the Internet, local-area-networks (LANs), wide-area-networks (WANs), satellite networks, any other suitable communications network, or any combination of the same.

FIG. 3 is an illustrative trading interface 104 (FIG. 1). As shown, trading interfaces 104 may include an input device 302 and an output device 304. Trading interface 104 may include any other suitable components.

Input device 302 may be any suitable input device through which a user may input, into trading system 100, parameters for linking a bid and an offer. Input device 302 may also be any suitable device through which a user may input, into trading system 100, a linked bid and offer. Such suitable devices include keyboards, pointing devices (e.g., a mouse), microphones (for receiving voice commands), touch-sensitive screens, or any other suitable devices. Parameters for bids and offers, requests to link bids and offers, hits on bids, and takes on offers may also be input via input device 302. Any other suitable request or action may be input via input device 302.

Output device 304 may be any suitable device or devices through which information may be output or presented to a user of a trading interface 104. Such information may be market information, bids, offers, linked bids and offers, and information related to information input by a user of trading system 100 (e.g., the user of trading interface 104). For example, output device 304 may be one or more computer monitors, televisions, personal digital assistants, cellular-phones with display screens, or any other suitable device or devices.

Portions of input device 302 and output device 304 may be implemented on the same hardware. For example, if input device 302 were a touch-sensitive screen, output device 304 may be the touch-sensitive screen.

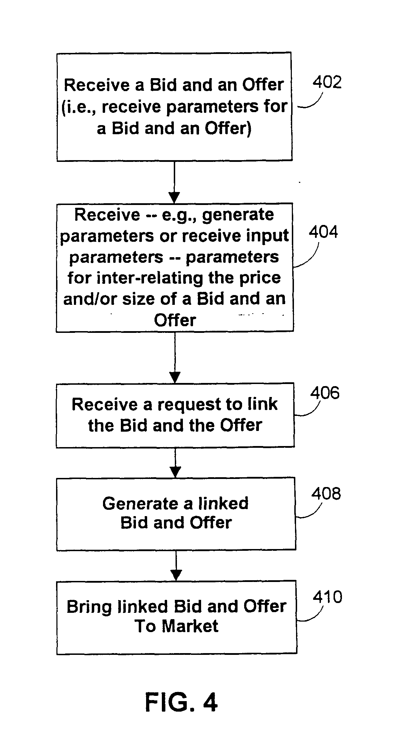

FIG. 4 is an illustrative flow chart of steps involved in electronic trading system 100 receiving parameters for linking a bid and an offer, receiving a request to link the bid and the offer, generating a linked offer and bid based on the received values and parameters, and bringing the linked bid and offer to market.

At step 402, electronic trading system 100 (FIG. 1) may receive a bid and offer (i.e., receive parameters for a bid and an offer). At step 404, trading system 100 may receive parameters for linking a bid and an offer. These parameters may be entered by a user of, for example, a trading interface 104 (FIG. 1). Parameters may include, for example, that the price or size of the bid is fixed (i.e., absolute) or a function of some other value such as an offer, and that the price or size of the offer is fixed (i.e., absolute) or a function of some other value such as a bid. In an alternative embodiment, the parameter may be generated based on historical data, related market data or other suitable data.

At step 406, trading system 100 may receive a request to link the bid and the offer. A request may be entered by a user of, for example, a trading interface 104. Trading system 100 may receive parameters for linking the bid and the offer (step 404) before or at the same time as trading system 100 receives the request to link the bid and the offer (step 406).

At step 408, trading system 100 may generate an offer or a bid based on the bid and offer received at step 402 and the parameters received at step 404. That is, trading system 100 may generate an offer or bid linked to a bid or offer.

At step 410, trading system 100 may bring the linked bid and offer to market preferably substantially simultaneously, though the bid and offer may also be brought to market at different intervals -- e.g., at a pre-determined interval of seconds, minutes, hours, or any other suitable interval as configured by the user or as determined by trading system 100 based on historical data or any other suitable data.

The bid and offer may be brought to market substantially simultaneously such that they may be acted upon (e.g., the bid may be hit and the offer may be taken) by a user of trading system 100 (e.g., a user at a trading interface 104) at substantially the same time. The linked bid and offer may be displayed on an output device at a trading interface (e.g., output device 304; FIG. 3).

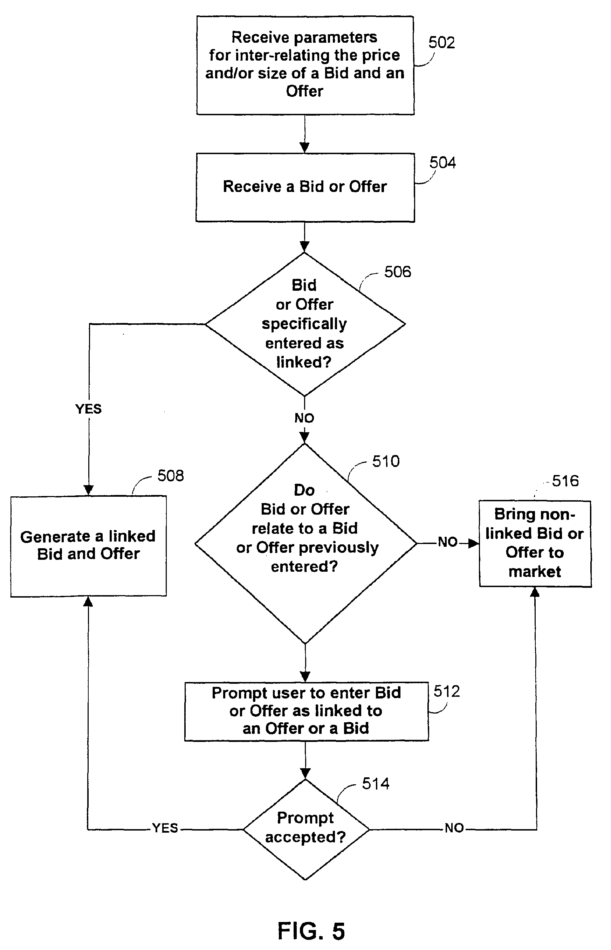

FIG. 5 is an illustrative flow chart of steps involved in trading system 100 (FIG. 1) checking a bid or offer to determine whether the bid or offer was specifically entered as linked to an offer or bid, and generating a linked bid and offer, a non-linked bid, or a non-linked offer based on the determination.

At step 502, parameters for linking a bid and an offer may be received. These parameters may be entered by a user of, for example, a trading interface 104 (FIG. 1). At step 504, trading system 100 may receive a bid or offer (i.e., receive parameters for an individual bid or offer). At step 506, trading system 100 may determine whether the bid or offer received at step 504 was specifically entered as linked to an offer or bid. If trading system 100 determined that the bid or offer was specifically entered as linked to an offer or bid, trading system 100 may generate a linked bid and offer based on the received parameters. This may occur at step 508.

If trading system 100 determined that the bid or offer was not specifically entered as a linked bid or offer at step 506, trading system 100 may determine whether the bid or offer matches parameters for a bid or offer that was previously linked to an offer or bid (step 510).

If the bid or offer does not match parameters for a bid or offer previously linked to an offer or bid, trading system 100 may generate a bid or offer in the same manner as any other bid or offer (i.e,. a non-linked bid or a non-linked offer). This may occur at step 516.

If the bid or offer matches parameters for a bid or offer previously linked to an offer or bid, respectively, trading system 100 may prompt the user to enter the bid or offer as a linked bid or offer. That is, trading system 100 may prompt the user to enter a bid as a bid linked to an offer based on the parameters entered by the user, or trading system 100 may prompt the user to enter an offer as an offer linked to a bid based on the parameters entered by the user. This may occur at step 512.

At step 514, trading system 100 may then determine whether the user accepted the prompt. If the user accepted the prompt, trading system 100 may generate a linked bid or offer based on the received parameters (step 508). If the user did not accept the prompt, a non-linked bid or a non-linked offer may be brought to market (step 516).

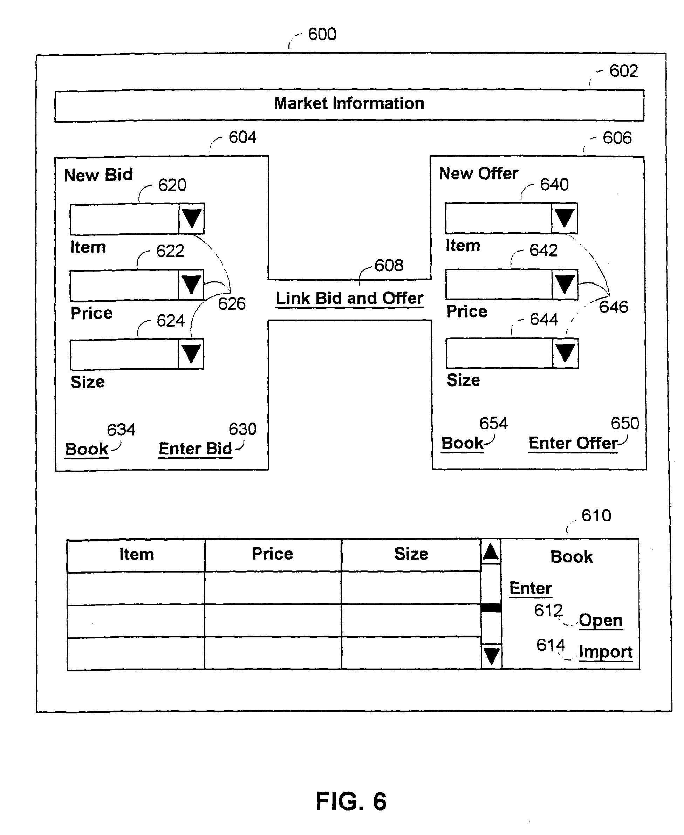

FIGS. 6-11 are illustrative display windows that may be displayed on output device 304 (FIG. 3) of a trading interface 104 (FIG. 1) in accordance with the present invention. A user of a trading interface 104 may interact with trading system 100 via a display window such as display window 600 (FIG. 6).

Display window 600 may incorporate a market information display 602, a "new bid" selection menu 604, a "new offer" selection menu 606, a "link bid and offer" option 608, and a "book" selection menu 610.

Market information display 602 may include any suitable information regarding any suitable market. Such markets may be energy markets, stock markets, bond markets, futures contracts markets, and currency markets. The market information displayed in market information display 602 may be information regarding the market on which a user is entering a bid, an offer, or both. For example, if the user of trading interface 104 were entering a bid on an item related to energy (e.g., a book of bids or offers related to energy is being searched), the information displayed in market information display 602 may be related to energy items.

Information may be displayed in market information display 602 in the form of a ticker (e.g., a stock ticker, a scrolling marquee), as news headlines, or in any other suitable way. The information displayed in market information display 602 may be static or animated.

New bid selection menu 604 may provide a user with an item display field 620, a price display field 622, and a size display field 624 to allow the user of trading interface 104 to introduce parameters for new bids into the trading system. Menu buttons 626, if selected, may provide the user with a pull down menu of pre-defined or previously used parameters for items, prices, and sizes for bids.

New offer selection menu 606 may provide a user with an item display field 640, a price display field 642, and a size display field 644 to allow the user of trading interface 104 to introduce parameters for new offers into the trading system. Menu buttons 646, if selected, may provide the user with a pull down menu of pre-defined or previously used parameters for items, prices, and sizes for offers.

A name of a new bid or offer may be entered into item fields 620 and 640, respectively. The price of a new bid or offer may be entered into price fields 622 and 642, respectively. The price entered into fields 622 and 642 may be a fixed value (i.e., an absolute value) or a value that is a function of, or proportional to, some other value.

For example, if a user of an electronic trading system entered a bid to buy 100 million U.S. dollars in Japanese Yen at X U.S. dollars per Yen and then entered an offer to sell 10 million U.S. dollars worth of French Francs at Y U.S. dollars per Franc, X could be a function of Y, X could be a function of any other value, Y could be a function of X, and Y could be a function of any other value.

The size of a new bid or offer may be entered into size fields 624 and 644, respectively. Sizes may be entered in any suitable convention (e.g., as hundreds of shares). The size entered into size fields 624 and 644 may be a fixed value (i.e., an absolute value) or a value that is a function of, or proportional to, some other value.

A user of trading system 100 may also select an option such as book option 634 to enter parameters into fields 620, 622, and 624 for a new bid or an option such as book option 654 to enter parameters into fields 640, 642, and 644 for a new offer. Upon selecting book options 634 and 654, the user may be brought to book selection menu 610. Book selection menu 610 may be a menu to select bids or offers depending on whether book option 634 or book option 654 was selected.

Book selection menu 610 may provide the user with an open option 612 and an import option 614. Open option 612 may allow the user to open an already existing book of bids or offers in a trading application. Import option 614 may allow the user to import a book of bids or offers from another application. For example, a user may access a trading interface (e.g., trading interface 104) at a remote location and import (by selecting import option 614) his or her books to the trading interface currently being operated. Multiple bid or offer items (e.g., acquired from a book) may then be displayed to the user on an output device (e.g., output device 304) via, for example, a display window such as display window 600.

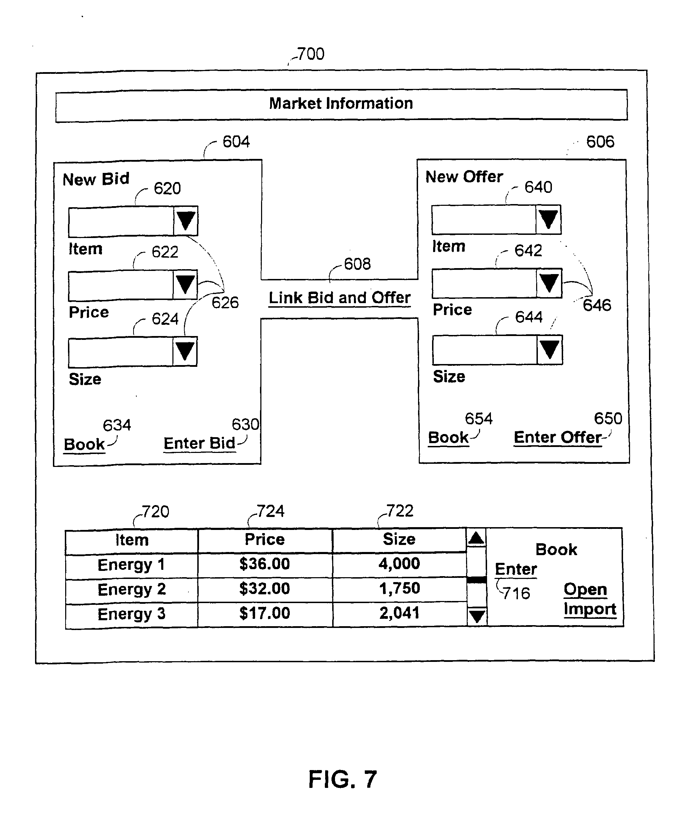

When a book of bids or offers is imported or opened, the bids or offers of that particular book may be displayed. As shown in illustrative display window 700 of FIG. 7, for example, a book of bids or offers related to energy may be imported. As shown in book selection menu 610, several energy items are listed. The names, sizes, and prices of the items are shown in the columns for item (item column 720), size (size column 722), and price (price column 724). The items listed in book selection menu 610 may be scrolled up and down by selecting scroll bar 726.

When the user has found a bid or offer for which he or she would like to enter the parameters in new bid selection menu 604 or new offer selection menu 606, the user may select that bid or offer by, for example, highlighting the bid or offer (not shown) and selecting enter option 716. The user may also double-click on a bid or offer with a pointing device (e.g., an input device 302; FIG. 3) to select a bid or offer. These examples are merely illustrative. A bid or offer may be selected from a book in any suitable way.

A bid or offer from a book may be edited in any suitable way. That is, the parameters (e.g., name, price, size) of a bid or offer from a book may be changed as the user desires. For example, after a price for a bid has been entered into field 622, the user may delete any value in field 622 by, for example, hitting a delete or backspace key on an input device 302 (FIG. 3) such as a keyboard. The user may then enter the desired parameter using input device 302. The user may desire to change a parameter when, for example, a bid or offer was imported from a book. The imported parameter for the price of a bid may be fixed. If desired, the user may change (i.e., edit) the fixed price to a price that is a function of some other value.

A user may enter a non-linked bid by entering parameters into fields 620, 622, and 624 and then selecting enter bid option 630 (FIG. 6). The parameter in price field 622 may be fixed or a parameter that is a function of a value other than a parameter of an offer currently being input by the user of trading interface 104. The value in size field 624 may be fixed or a parameter that is a function of a value other than a parameter of an offer currently being input by the user of trading interface 104.

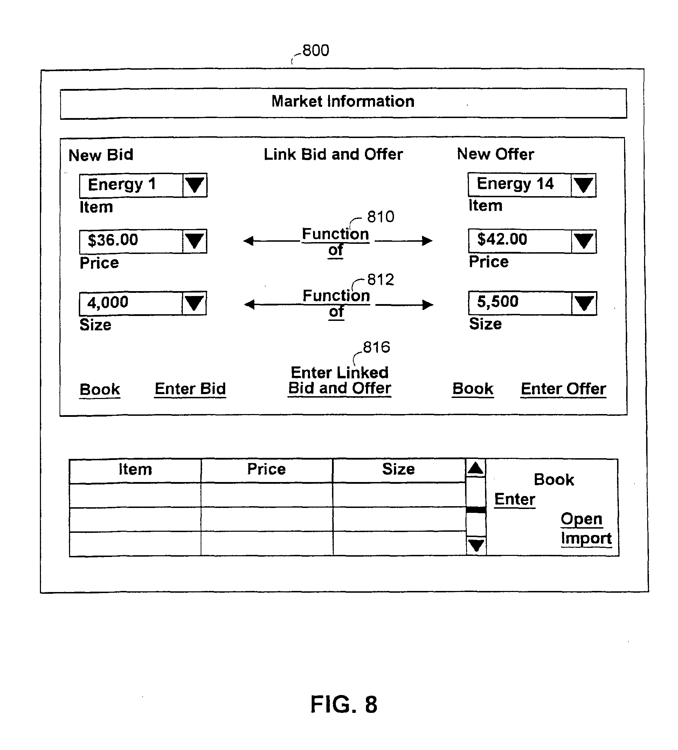

A user may enter a linked bid by entering parameters into fields 620, 622, and 624 and then selecting link bid and offer option 608. Selecting link bid and offer option 608 may bring the user to a new menu through which the user may enter parameters for linking a bid and an offer. Alternatively, the display window (e.g., display window 600) may change to incorporate options to enter parameters for linking a bid and an offer. Such a display window is display window 800 (FIG. 8).

When entering a linked bid, it is not necessary that a parameter be entered into price field 622. Similarly, when entering linked offers, it is not necessary that a parameter be entered into price field 642. Trading system 100 preferably premises that a linked bid and offer without parameters entered into price field 622, price field 642, or both, is a linked bid and offer in which the prices of the bid and offer are functions of each other or functions of some other value or values. This may also be true for the size of a bid, an offer, or both (i.e., it is not necessary that a parameter be entered into size fields 624 and 644). The user may be provided with an opportunity to input parameters such as an absolute or non-absolute value parameter for a bid or offer in response to selecting link bid and offer option 608.

As illustrated in display window 800 of FIG. 8, a user of a trading interface 104 may enter parameters for inter-relating the price and/or size of a bid and an offer. As shown, parameters for a new bid and a new offer have been entered. Before entering the new bid and new offer, the user may determine the parameters for linking the bid and offer. That is, the user may determine whether the parameters (e.g., prices, sizes, etc.) entered for the new bid and new offer are going to be fixed (i.e., an absolute value) or a function of some other value.

For example, the user may select "Function Of" option 810 to make the price of the bid and the offer functions of some other value (e.g., market conditions, historical data, etc.) or each other. The user may also select the user may select "Function Of" option 812 to make the size of the bid and the offer functions of some other value (e.g., market conditions, historical data, etc.) or each other. To make a parameter for a new bid or new offer fixed, that parameter should not be a function of another value (i.e., the user should not choose "Function Of" option 810 or 812 for that parameter).

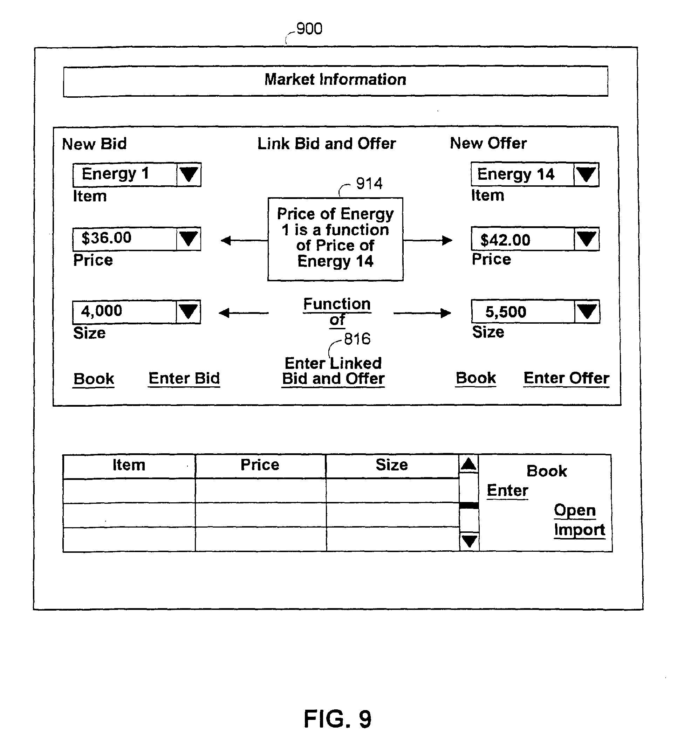

Upon selecting "Function Of" option 810, a function field such as function field 914 (shown in FIG. 9) may be displayed. The user may enter a function or functions linking the price of the bid and the offer in function field 914. As illustrated in display window 900, the price of new bid "energy 1" is a function of the price of new offer "energy 14." A function for linking the size of the bid and the offer may also be entered in a function field (not shown) in response to "Function Of" option 812 being selected.

When the user is satisfied with the parameters and values of the bid and offer to be linked, the linked bid and offer may be linked by selecting enter linked bid and offer option 816 (FIGS. 8 and 9). As shown in FIG. 9, the user has configured the individual spread by linking a preselected bid and offer and configuring the individual parameters on each side of the linked bid and offer. In a different embodiment, the spread may have been automatically generated by trading system 100 based on suitable data.

In some embodiments of the present invention, trading system 100 may check whether the user would like to enter a bid or offer as a linked bid or offer after a non-linked bid or a non-linked offer has been entered. Trading system 100 may determine whether to check whether the user would like to enter a bid or offer as a bid or an offer linked to an offer or bid based on previously entered values (e.g., names, sizes, prices) for bids and offers.

If the user enters a bid or an offer with the same or similar values (i.e., within a predetermined range) of a bid or an offer that was part of a previously linked bid and offer, trading system 100 may prompt the user to enter the bid or offer as a bid or offer linked to an offer or bid. The offer or bid that trading system 100 may prompt the user to link the bid or offer to may be an offer or bid with the same or similar values as an offer or bid that was previously linked to a bid or offer with the currently input parameters.

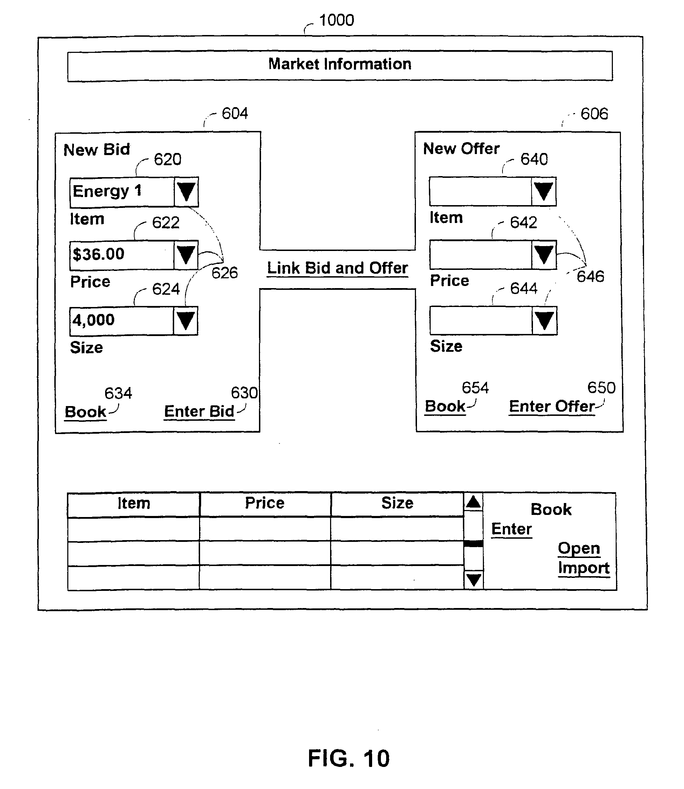

As illustrated in display window 1000 of FIG. 10, the item, price, and size values of a new bid have been entered into fields 620, 622, and 624, respectively, of new bid selection menu 604. In response to selecting enter bid option 630, trading system 100 may check whether the user would like to enter the new bid as a bid linked to an offer. If, for example, the new bid was a bid for 4,000 shares at $36.00 a share for an item called "energy 1" and the user had previously entered the same or similar bid linked to an offer for 5,500 shares at$42.00 a share for an item called "energy 14," trading system 100 may prompt the user to link the new bid to an offer for 5,500 shares of "energy 14" at a price that corresponds to a pre-determined spread.

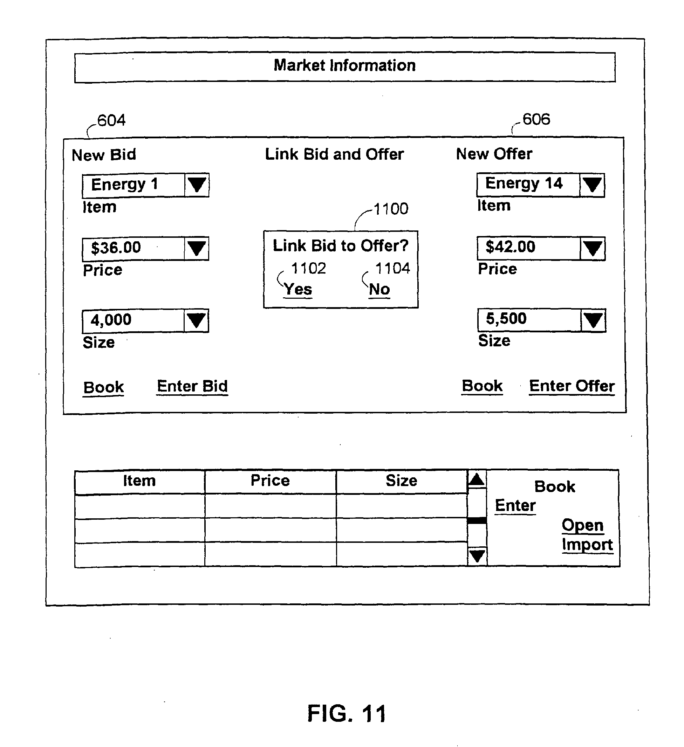

FIG. 11 illustrates trading system 100 prompting the user of a trading interface 104 to link a bid to an offer. A new bid for 4,000 shares at $36.00 a share for "energy 1" was previously entered. Trading system 100 may automatically complete fields 640, 642, and 644 of new offer selection menu 606 with the values for an offer for 5,500 shares of "energy 1" based on a pre-determined spread. Alternatively, trading system 100 may generate an offer for 5,500 shares of "energy 14" at$42.00 a share. The user may accept to link the bid to the offer by selecting yes option 1102 in prompt display 1100. The user may decline to link the bid to the offer by selecting no option 1104 of prompt display 1100.

These examples are merely illustrative. A bid may be linked to an offer in any suitable way. A bid and an offer may be brought to market in any suitable way. Although the discussion regarding FIGS. 6-11 has emphasized placing a bid and then an offer, an offer may similarly be placed before a bid.

Thus, systems and methods for linking bids and offers in a trading interface are provided. One skilled in the art will appreciate that the present invention can be practiced by other than the described embodiments, which are presented for purposes of illustration and not of limitation; and the present invention is limited only by the claims which follow.

## Claims

1. A method for using an electronic trading system comprising a trading interface and a trading server, the method comprising:
receiving a bid;
receiving a parameter for linking the bid to an offer; and
generating an offer based on the received bid and the receiver parameter wherein:
the offer and the bid are brought to market substantially simultaneously.

2. The method for using an electronic trading system comprising a trading interface and a trading server, the method comprising:
receiving an offer;
receiving a parameter for linking the offer to a bid; and
generating a bit based on the received offer and the received parameter wherein:
the offer and the bid are brought to market substantially simultaneously.

3. The method of claim 1 or 2, wherein the receiving the parameter comprising generating the parameter based on historical data.

4. The method of claim 1 or 2, wherein the receiving the parameter comprises generating the parameter based on market data or market data that is related to the bid.

5. The method of claim 1 or 2, wherein the receiving the parameter the parameter comprises prompting a user to input the parameter.

6. The method of claim 1 or 2, wherein the receiving the parameter comprises generating a price spread between the bid and the offer.

7. The method of claim 1 or 2, wherein the receiving the parameter comprises generating a volume spread between the bid and the offer.

8. The method of claim 1 or 2, wherein the receiving the parameter the parameter comprises generating a price spread and a volume spread between the bid and the offer.

9. A method for using an electronic trading system comprising a trading interface and a trading server, the method comprising:
receiving a bid;
generating a parameter for linking a bid to an offer based on historical data; and
generating an offer based on the received bid and the received parameter.

10. A method for using an electronic trading system comprising a trading interface and a trading server, the method comprising:
receiving a bid;
prompting a user to input the parameter;
receiving the parameter; and
generating an offer based on the received bid and the received parameter.
